# EUROPEAN PATENT APPLICATION

(11) **EP 4 534 346 A1**
(43) Date of publication of application: **09.04.2025**
(21) Application number: 24205313.0
(22) Date of filing: 08.10.2024
(51) Int. Cl.: B60N 2/18, B60N 2/42

(54) **ZERO-GRAVITY SEAT COLLAPSING MECHANISM**

(30) Priority: 08.10.2023 CN 202311293411
(71) Applicant: Adient (Chongqing) Automotive Components Co., Ltd., Liangjiang New Area, Chongqing (CN)
(72) Inventor: ZHANG, Ming, Liangjiang New Area, Chongqing (CN); CHEN, Zhiyong, Liangjiang New Area, Chongqing (CN); HE, Xiaodong, Liangjiang New Area, Chongqing (CN); GUAN, Ying, Liangjiang New Area, Chongqing (CN); LIU, Yawei, Liangjiang New Area, Chongqing (CN)
(74) Representative: Liedtke & Partner Patentanwälte

(57) **Abstract**

The present invention discloses a zero-gravity seat collapsing mechanism, including a base and a seat frame located on an upper side of the base, a rear end of the seat frame being rotatably connected to the base, upper linkage components being rotatably connected to a front end of the seat frame, lower linkage components being rotatably connected to a front end of the base, and the upper linkage component and the lower linkage component being hinged to each other by means of a pin, wherein a collapsing piece is fixedly connected to a side of each upper linkage component, the collapsing piece has an adapter hole located in a lower portion, a collapse channel located in an upper portion, and a weakened portion formed between the adapter hole and the collapse channel, the upper linkage component has a strip-shaped avoidance hole, and the adapter hole and the collapse channel are both exposed in the strip-shaped avoidance hole. The present invention provides the beneficial effect of a seat being able to instantaneously restore from a zero-gravity mode to a normal seated mode when a vehicle collision occurs, thereby improving the safety of the seat.

## Description

### TECHNICAL FIELD

The present invention relates to the technical field of vehicle seats, and particularly relates to a zero-gravity seat collapsing mechanism.

### BACKGROUND ART

With the improvement of living standards, people have paid more attention to enjoying their lives, a seat having the function of zero-gravity mode, namely, a zero-gravity seat of a vehicle, is one of the products that brings enjoyment to people's lives.

The zero-gravity mode of the zero-gravity seat is a mode in which a front end of a seat frame is lifted upwardly, a backrest is tilted backwardly, and a leg support is in a slightly tilted posture. In the zero-gravity mode, although a user can lie on the seat in a very comfortable posture, there are still some potential safety hazards, for example, in a lying state, a restraining action of a safety belt on an occupant is reduced, which would lead to a serious threat to the life of the occupant once a vehicle collision occurs.

### SUMMARY

In view of this, the present invention provides a zero-gravity seat collapsing mechanism, which enables a seat to instantaneously restore from a zero-gravity mode to a normal seated mode when a vehicle collision occurs, and thus improves the safety of the seat.

In order to achieve the above objective, the technical solution of the present invention is as follows.

A zero-gravity seat collapsing mechanism includes a base and a seat frame located on an upper side of the base, a rear end of the seat frame being rotatably connected to the base, upper linkage components being rotatably connected to a front end of the seat frame, lower linkage components being rotatably connected to a front end of the base, and the upper linkage component and the lower linkage component being hinged to each other by means of a pin, wherein a collapsing piece is fixedly connected to a side of each upper linkage component, the collapsing piece has an adapter hole located in a lower portion, a collapse channel located in an upper portion, and a weakened portion formed between the adapter hole and the collapse channel, the upper linkage component has a strip-shaped avoidance hole, and the adapter hole and the collapse channel are both exposed in the strip-shaped avoidance hole.

With the above structure, if a collision occurs when a vehicle seat is in the zero-gravity mode, the pin can force the weakened portion of the collapsing piece to be deformed and torn, and the pin enters the collapse channel to move upwardly to allow the front end of the seat frame to descend rapidly, such that the seat can instantaneously restore to a normal seated mode, and at this point, a restraining action of a safety belt on an occupant restores to a normal state, thereby ensuring the safety of the seat.

Preferably, the base is slidably mounted on a vehicle by means of a slide rail. With the above structure, the seat can be adjusted in a front-rear direction.

Preferably, a stop pin protruding inwardly is mounted on an upper side edge of the lower linkage component, and the lower end of the upper linkage component can be supported on the stop pin when the seat frame is in a folded state. With the above structure, it can be ensured that when the seat is in the folded state, that is, in the normal seated mode, the collapsing piece would not collapse accidentally, thereby ensuring the safety and reliability of the seat in normal use, and providing an effect of preventing accidental collapse. Of course, such a design also makes it possible to prevent the collapsing response of the collapsing mechanism caused by a child stepping and jumping on the seat.

Preferably, an arc-shaped groove having an opening facing downwards is provided in the lower end of the upper linkage component. With the above structure, it can be ensured that the seat frame in the folded state is more stably supported on the stop pin.

Preferably, an arc-shaped groove having an opening facing upwards is provided in an upper side of the lower linkage component, and the stop pin is fixedly connected in the arc-shaped groove by means of welding. With the above structure, it can be ensured that the entire anti-trigger collapsing mechanism system is more stable and robust.

Preferably, the upper linkage component and the lower linkage component are both of piece-like structures, wherein the lower linkage component is rotatably arranged at the front end of the base by means of an angle adjuster. With the above structure, the adjustment of the overall angle of inclination of the vehicle seat may be achieved, which cooperates with other adjustments of angles of inclination of the vehicle seat, thereby achieving the zero-gravity mode of the vehicle seat to allow occupants to feel more comfortable.

Preferably, a side of the weakened portion located on the collapse channel is of a cambered structure protruding upwardly, a deformation guide groove which is recessed downwardly is provided in the middle of the cambered structure, and the deformation guide groove is an inverted triangular structure that is wider at the top and narrower at the bottom. With the above structure, it can be ensured that, when the collapsing response is caused, the structure is most conducive to the deformation and tearing of the collapsing piece, and energy is absorbed during the collapse of the collapsing piece, thereby reducing the capability of accident to spread to the occupant, and optimizing a value of damage.

Preferably, the collapsing piece is a metal part having a thickness of 1 mm, and the collapsing piece is connected to an inner side of the upper linkage component by means of welding. With the above structure, the stability of the entire collapsing structure can be ensured; if an accident occurs when the seat is in the zero-gravity mode, it can be ensured that the damage to a person is reduced, and the collapsing piece has the advantages of simple structure, low cost and high reliability.

Preferably, the pin is of a stepped structure which has an outer support section and an inner support section, the inner support section being rotatably fitted in the adapter hole by means of a bushing, and the outer support section being fixedly fitted on the lower linkage component. With the above structure, the upper linkage component and the lower linkage component can be stably connected together.

Compared with the prior art, the beneficial effects of the present invention are as follows.

1. In the zero-gravity mode, if a vehicle collision occurs, an impact force is transmitted to positions where the upper linkage components and the lower linkage components are hinged to each other, since the pins are supported on the weaker collapsing pieces, the pins are forced by the impact force to break the weakened portions, and then slide upwardly along the collapse channels to allow the front end of the seat frame to descend rapidly, such that the seat can instantaneously restore to the normal seated mode. At this point, the restraining action of the safety belt on the occupant restores to a normal state, thereby ensuring the safety of the seat.

2. The collapse is passive collapse which is completed by means of mechanical damage, and the cost comes from a sheet metal part having a thickness of 1 mm, thereby providing the advantages of low cost, high reliability, etc.

3. The process of collapsing itself allows energy to be absorbed to reduce the impact force on the seat, thereby optimizing the value of damage to the occupant.

### BRIEF DESCRIPTION OF THE DRAWINGS

FIG. 1 is a perspective view of a seat under a normal condition (with a backrest concealed);
FIG. 2 is a schematic structural diagram of an upper linkage component (with a collapsing piece welded on an inner side);
FIG. 3 is a schematic structural diagram of the collapsing piece;
FIG. 4 is a partial schematic structural diagram showing a mounting relationship between the upper linkage components and lower linkage components on two sides of a seat frame (in a normal seated state);
FIG. 5 is a partial schematic structural diagram showing a mounting relationship between the upper linkage components and the lower linkage components on the two sides of the seat frame (in a zero-gravity mode state);
FIG. 6 is a partial schematic structural diagram showing a mounting relationship between the upper linkage components and the lower linkage components on the two sides of the seat frame (in a collapsed state);
FIG. 7 is a partial cross-sectional view showing an assembly relationship between the upper linkage component and the lower linkage component by means of a pin 6;
FIG. 8 is a right side view of the seat in a zero-gravity mode (with the backrest concealed); and
FIG. 9 is a schematic diagram of the seat of FIG. 8 after collapse due to an impact.

### DETAILED DESCRIPTION OF EMBODIMENTS

The present invention will be further described with reference to embodiments and accompanying drawings.

Orientations such as "front", "rear", "upper" and "lower" mentioned in the embodiments refer to the orientations of a vehicle seat in an actual use state.

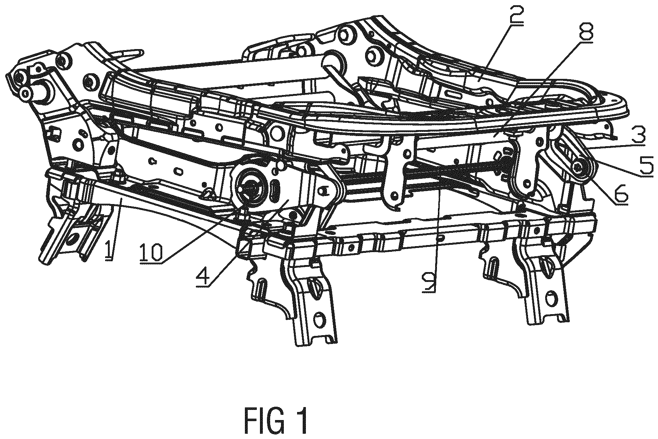

As shown in FIG. 1, a zero-gravity seat collapsing mechanism includes a base 1 and a seat frame 2 located on an upper side of the base 1, wherein a rear end of the seat frame 2 is rotatably connected to the base 1, upper linkage components 3 are rotatably connected to a front end of the seat frame 2, lower linkage components 4 are rotatably connected to a front end of the base 1, the upper linkage component 3 and the lower linkage component 4 are hinged to each other by means of a pin 6, and a collapsing piece 5 is fixedly connected to a side of the upper linkage component 3.

Further, the upper linkage component 3 and the lower linkage component 4 are both of piece-like structures, wherein the lower linkage component 4 is rotatably arranged at the front end of the base 1 by means of an angle adjuster 10. It can be seen with reference to FIG. 1 that, in the embodiment, the upper linkage component 3 and the lower linkage component 4 are arranged on each of the right and left sides of the seat, the upper linkage components 3 on the two sides are synchronously connected by means of a first synchronizing rod 8, and the lower linkage components 4 on the two sides are synchronously connected by means of a second synchronizing rod 9. With such a design, when the angle adjuster 10 operates, a front portion of the seat frame can be driven to move up and down, which cooperates with other adjustments of the vehicle seat, thereby achieving the zero-gravity mode of the vehicle seat to allow an occupant to feel more comfortable.

As shown in FIGS. 1-3, the collapsing piece 5 has an adapter hole 5a located in a lower portion, a collapse channel 5b located in an upper portion, and a weakened portion 5c formed between the adapter hole 5a and the collapse channel 5b. The upper linkage component 3 has a strip-shaped avoidance hole 3a, and the adapter hole 5a and the collapse channel 5b are both exposed in the strip-shaped avoidance hole 3a. The collapsing piece 5 is a metal part having a thickness of 1 mm, and the collapsing piece 5 is connected to an inner side of the upper linkage component 3 by means of welding. Such a design has the advantages of low cost and high reliability.

Further, a side of the weakened portion 5c located on the collapse channel 5b is of a cambered structure 5c1 protruding upwardly, a deformation guide groove 5c2 recessed downwardly is provided in the middle of the cambered structure 5c1, and the deformation guide groove 5c2 is an inverted triangular structure that is wider at the top and narrower at the bottom. Such a design can ensure that, when a collapsing response is caused, a metal piece is more easily torn and performs the collapsing response in a preset direction.

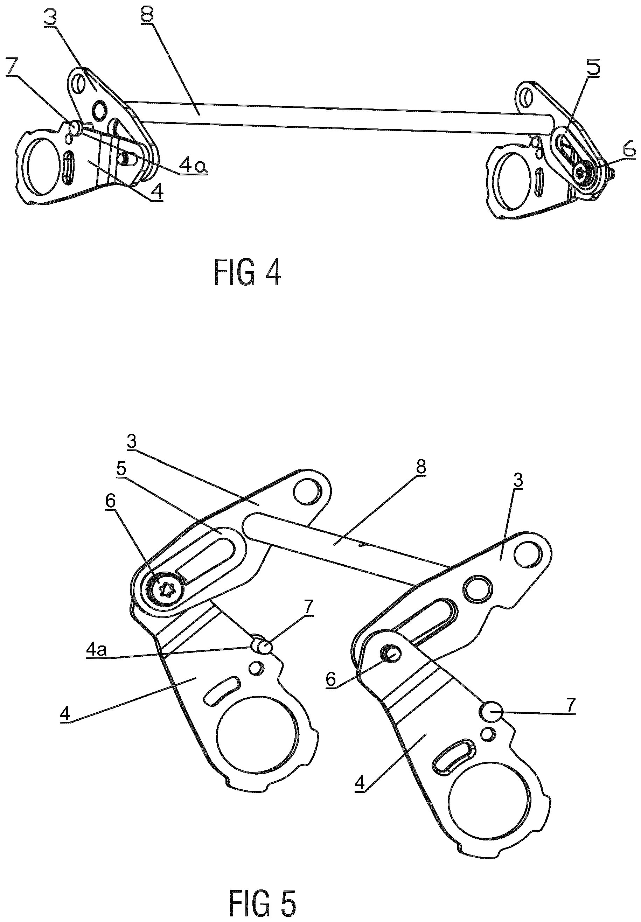

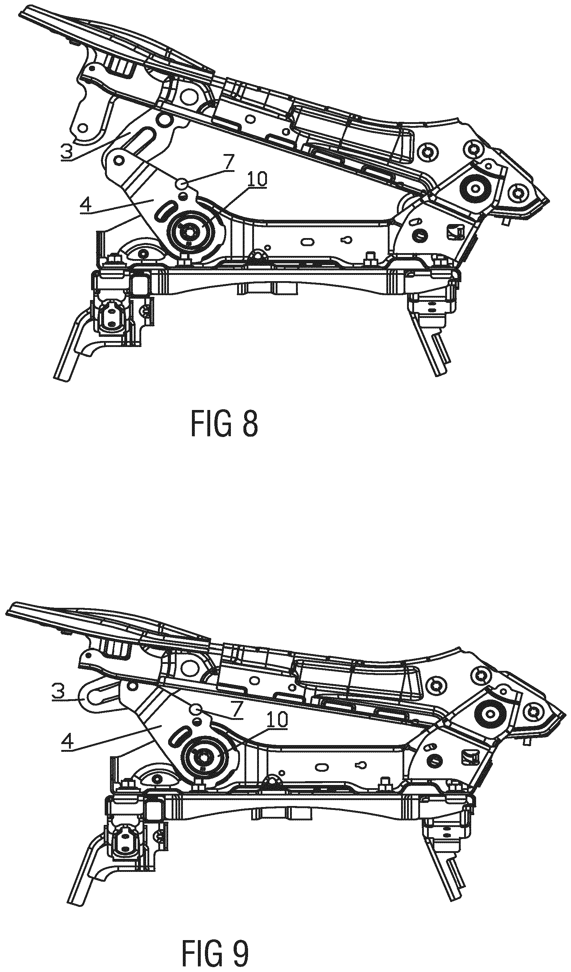

Further, with reference to FIGS. 5, 6, 8 and 9, the pin 6 is supported in the adapter hole 5a, and in the zero-gravity mode, when an impact force is greater than a force by which the collapsing piece 5 is damaged, the pin 6 can force the weakened portion 5c to be deformed and torn, and enter the collapse channel 5b to move upwardly, thereby completing the whole collapsing response. The collapsing is passive collapsing which is completed by means of mechanical damage, the process of collapsing itself allows energy to be absorbed to reduce the impact force on the seat, thereby optimizing a value of damage to the occupant. When the collapsing response is caused, the front end of the seat frame 2 rapidly descends as the pins 6 move upwardly, such that the seat can instantaneously restore to a normal seated mode, and at this point, the restraining action of a safety belt on the occupant restores to a normal state, thereby ensuring the safety of the seat.

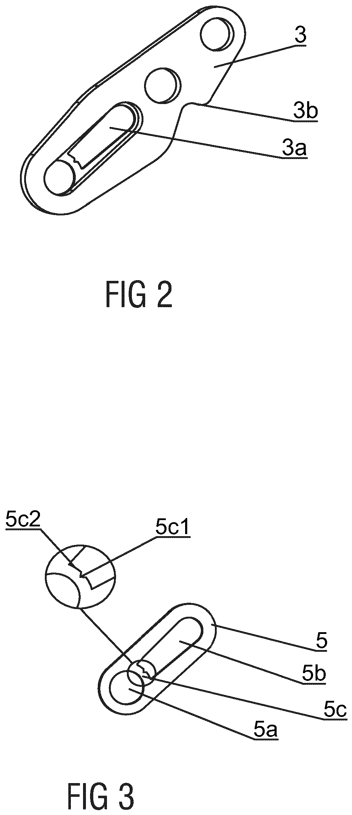

Further, with reference to FIGS. 2 and 4, an arc-shaped groove 3b which has an opening facing downwards is provided in a lower end of the upper linkage component 3, an arc-shaped groove 4a which has an opening facing upwards is provided in an upper side of the lower linkage component 4, a stop pin 7 is fixedly connected in the arc-shaped groove 4a by means of welding, and when the seat is in a normal state, the arc-shaped groove 3b exactly catches the stop pin 7. Such a structure can ensure that when the seat is in a folded state, that is, in the normal seated mode, the collapsing piece would not collapse accidentally, thereby ensuring the safety and reliability of the seat in normal use, and providing an effect of preventing accidental collapse. Of course, such a design also makes it possible to prevent the collapsing response of the collapsing mechanism caused by a child stepping and jumping on the seat.

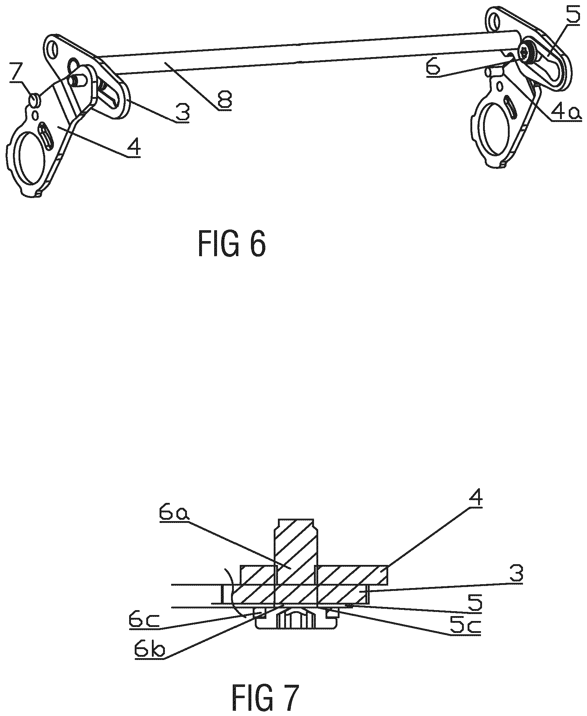

As shown in FIG. 7, the pin 6 is of a stepped structure which has an outer support section 6a and an inner support section 6b. The inner support section 6b is rotatably fitted in the adapter hole 5a by means of a bushing 6c, and the outer support section 6a is fixedly fitted on the lower linkage component 4. Such a structure can ensure that the upper linkage component and the lower linkage component are rotatably connected together more robustly.

Finally, it should be noted that the foregoing description is merely a preferred embodiment of the present invention, those skilled in the art can make, under the inspiration from the present invention, a variety of similar presentations without departing from the spirit and claims of the present invention, and such modifications all fall within the scope of protection of the present invention.

## Claims

1. A zero-gravity seat collapsing mechanism, which comprises a base (1) and a seat frame (2) located on an upper side of the base (1), a rear end of the seat frame (2) being rotatably connected to the base (1), upper linkage components (3) being rotatably connected to a front end of the seat frame (2), lower linkage components (4) being rotatably connected to a front end of the base (1), and the upper linkage component (3) and the lower linkage component (4) being hinged to each other by means of a pin (6), wherein a collapsing piece (5) is fixedly connected to a side of the upper linkage component (3), the collapsing piece (5) has an adapter hole (5a) located in a lower portion, a collapse channel (5b) located in an upper portion, and a weakened portion (5c) formed between the adapter hole (5a) and the collapse channel (5b), the upper linkage component (3) has a strip-shaped avoidance hole (3a), and the adapter hole (5a) and the collapse channel (5b) are both exposed in the strip-shaped avoidance hole (3a); and the pin (6) is supported in the adapter hole (5a), and when a seat is impacted by an external force, the pin (6) is capable of forcing the weakened portion (5c) to be deformed and torn, and entering the collapse channel (5b) to move upwardly.

2. The zero-gravity seat collapsing mechanism as claimed in claim 1, wherein a stop pin (7) protruding inwardly is mounted on an upper side edge of the lower linkage component (4), and a lower end of the upper linkage component (3) is capable of being supported on the stop pin (7) when the seat frame (2) is in a folded state.

3. The zero-gravity seat collapsing mechanism as claimed in claim 2, wherein an arc-shaped groove (3b) having an opening facing downwards is provided in the lower end of the upper linkage component (3).

4. The zero-gravity seat collapsing mechanism as claimed in claim 2 or 3, wherein an arc-shaped groove (4a) having an opening facing upwards is provided in an upper side of the lower linkage component (4), and the stop pin (7) is fixedly connected in the arc-shaped groove (4a) by means of welding.

5. The zero-gravity seat collapsing mechanism as claimed in any one of the preceding claims, wherein the upper linkage component (3) and the lower linkage component (4) are both of piece-like structures, wherein the lower linkage component (4) is rotatably arranged at the front end of the base (1) by means of an angle adjuster (10).

6. The zero-gravity seat collapsing mechanism as claimed in any one of the preceding claims, wherein a side of the weakened portion (5c) located on the collapse channel (5b) is of a cambered structure (5c1) protruding upwardly, and a deformation guide groove (5c2) which is recessed downwardly is provided in the middle of the cambered structure (5c1).

7. The zero-gravity seat collapsing mechanism as claimed in claim 6, wherein the deformation guide groove (5c2) is of an inverted triangular structure.

8. The zero-gravity seat collapsing mechanism as claimed in any one of the preceding claims, wherein the collapsing piece (5) is a metal part, and the collapsing piece (5) is connected to an inner side of the upper linkage component (3) by means of welding.

9. The zero-gravity seat collapsing mechanism as claimed in any one of the preceding claims, wherein the pin (6) is of a stepped structure which has an outer support section (6a) and an inner support section (6b), the inner support section (6b) being rotatably fitted in the adapter hole (5a) by means of a bushing (6c), and the outer support section (6a) being fixedly fitted on the lower linkage component (4).
